# EUROPEAN PATENT APPLICATION

(11) **EP 4 800 353 A1**
(43) Date of publication of application: **02.09.2026**
(21) Application number: 25886396.8
(22) Date of filing: 25.08.2025
(51) Int. Cl.: G01B 11/30, G01B 11/14, H01M 4/04

(54) **ELECTRODE ROLLING CONDITION INSPECTION SYSTEM**

(30) Priority: 30.10.2024 KR 20240150490; 21.08.2025 KR 20250116767
(71) Applicant: LG Energy Solution, Ltd., Seoul 07335 (KR)
(72) Inventor: LEE, Sung Ho, Daejeon 34122 (KR); LEE, Junghyoung, Daejeon 34122 (KR); CHOI, Hyeon, Daejeon 34122 (KR)
(74) Representative: Goddar, Heinz J.
(86) International application number: PCT/KR2025/012920
(87) International publication number: WO 2026/095292

(57) **Abstract**

According to an embodiment of the present disclosure, provided is an electrode pressing condition inspection system using optical measurement, comprising:
a pair of pressing rollers located at upper and lower parts on the basis of the transfer position of an electrode,
a driving unit that drives the pair of pressing rollers,
a first light source located on one side in the driving direction of the pair of pressing rollers and irradiating light toward the pair of pressing rollers,
a first sensor located on the other side in the driving direction of the pair of pressing rollers and detecting light transmitted from the first light source, and
a control unit that analyzes surface information of the pair of pressing rollers and the gap between the pair of pressing rollers from information acquired by the first sensor,
wherein the first light source and the first sensor are respectively movable in the width direction of the pair of pressing rollers.

## Description

### [TECHNICAL FIELD]

### Cross Citation with Related Application(s)

This application claims priority to and the benefit of Korean Patent Application No. 10-2024-0150490, filed on October 30, 2024, and Korean Patent Application No. 10-2025-0116767, filed on August 21, 2025, the disclosure of which is incorporated herein by reference in its entirety.

The present disclosure relate to an electrode pressing condition inspection system, and more particularly, to a system for inspecting electrode pressing conditions using optical measurement before/after electrode pressing.

### [BACKGROUND]

In modern society, as portable devices such as a mobile phone, a notebook computer, a camcorder and a digital camera, and energy storage systems(ESS) have been daily used, the development of technologies in the fields related thereto has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing

Currently commercialized secondary batteries include a nickel cadmium battery, a nickel hydrogen battery, a nickel zinc battery, a lithium secondary battery, and the like. Among these batteries, the lithium secondary battery has come into the spotlight because it has advantages, for example, being freely charged and discharged, and having very low self-discharge rate and high energy density.

The lithium secondary battery primarily uses a lithium-based oxide and a carbon material as a positive electrode active material and a negative electrode active material, respectively. The lithium secondary battery includes an electrode assembly in which a positive electrode plate and a negative electrode plate respectively coated with the positive electrode active material and the negative electrode active material are disposed with a separator interposed therebetween, and an exterior material, i.e., battery case, which seals and accommodates the electrode assembly together with an electrolyte solution.

The manufacturing process of such a lithium secondary battery is roughly classified into three steps: an electrode process, an assembly process, and a formation process. The electrode process may be again divided into an active material mixing process, an electrode coating process, a pressing process, a slitting process, a winding process, and the like. Among them, the pressing process is a process of passing an electrode substrate between a pair of pressing rolls heated to high temperature and compressing it to a desired thickness, in order to reduce the thickness of the electrode substrate having finished the coating process to thereby increase capacity density, and to increase the adhesion between the electrode current collector and the electrode active material.

Since the pressing process is performed by the pair of pressing rollers, it is inevitably greatly affected by pressing conditions, such as the state of the pair of pressing rollers, the gap between them, and the roller driving speed.

Therefore, studies are being actively conducted on methods for adjusting the gap between the pair of pressing rollers. Specifically, a reference gap position is stored using a gap gauge of reference thickness when replacing the pressing rollers, and during the pressing process, the roller position is changed based on the position of the reference gap to thereby adjust the gap. When the product specifications do not match after being manufactured in this manner, the roller position is corrected.

However, this method can identify only the relative position of the initial pressing rollers during cold pressing, and thus has a problem that it cannot reflect the gap reduction caused by roller expansion due to hot pressing and friction. In such cases, pressing conditions must be adjusted by referring to other indicators.

Thus, various studies are being conducted on methods that can adjust the gap between a pair of pressing rollers in real time.

Nevertheless, the specifications and quality of the electrodes acquired after the pressing process actually vary not only due to thickness variations caused by the gap between the pair of rollers, but also due to various other factors. Therefore, there is a need to develop a technology that can improve the quality of the produced electrodes while maintaining the quality constant.

### [DETAILED DESCRIPTION OF THE INVENTION[]

### [Technical Problem]

It is an object of the present disclosure to provide an electrode pressing condition inspection system that not only inspects the surface characteristics of a pair of pressing rollers used in the pressing process before the pressing process and eliminates defects in the pair of pressing rollers, but also maintains the gap between them constant in real time during the actual pressing process and thus can improve the product quality of the produced electrodes and maintain the quality constant.

However, the technical objects to be solved by embodiments of the present disclosure are not limited to the above-described objects, and can be variously expanded within the scope of the technical idea included in the present disclosure.

### [Technical Solution]

According to an illustrative aspect of the present disclosure, provided is an electrode pressing condition inspection system using optical measurement, comprising:
a pair of pressing rollers located at upper and lower parts on the basis of the transfer position of an electrode,
a driving unit that drives the pair of pressing rollers,
a first light source located on one side in the driving direction of the pair of pressing rollers and irradiating light toward the pair of pressing rollers,
a first sensor located on the other side in the driving direction of the pair of pressing rollers and detecting light transmitted from the first light source, and
a control unit that analyzes surface information of the pair of pressing rollers and the gap between the pair of pressing rollers from information acquired by the first sensor,
wherein the first light source and the first sensor are respectively movable in the width direction of the pair of pressing rollers.

### [BRIEF DESCRIPTION OF THE DRAWINGS]

FIG. 1 is a perspective view of a pressing condition inspection system according to an embodiment of the present disclosure.
FIG. 2 is a flow diagram of a pressing condition inspection system according to an embodiment of the present disclosure.
FIG. 3 is a surface information graph of a pair of pressing rollers determined to be normal.
FIG. 4 is a surface information graph of a pair of pressing rollers determined to be defective.
FIG. 5 is a schematic diagram of the longitudinal direction side of a pressing condition inspection system according to another embodiment of the present disclosure.
FIG. 6 is a schematic diagram of the width direction of a pressing condition inspection system according to another embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily implement them. The present disclosure may be modified in various different ways, and is not limited to the embodiments set forth herein.

Portions that are irrelevant to the description will be omitted in order to clearly describe the present disclosure, and the same reference numerals are used to designate the same or like components throughout the specification.

Meanwhile, the size and thickness of each component shown in the drawings are arbitrarily shown for convenience of explanation. Therefore, the present disclosure is not necessarily limited to contents shown in the drawings.

Further, throughout the specification, when a portion is referred to as "including" a certain component, it means that the portion can further include other components, without excluding the other components, unless otherwise stated.

Furthermore, throughout the specification, "one side" and "the other side" refer to both sides with a specific reference point in between. In addition, "edge part" refers to the end part of the component.

Moreover, throughout the specification, "width" refers to the length in the direction passing through a circle when the pressing roller is cut to have a circular cross section. In the case of a sensor, "width" also refers to the length in the above direction. Conversely, "length" refers to the length from one side to the other side of the pressing roller when viewed from the direction in which the electrode is inserted.

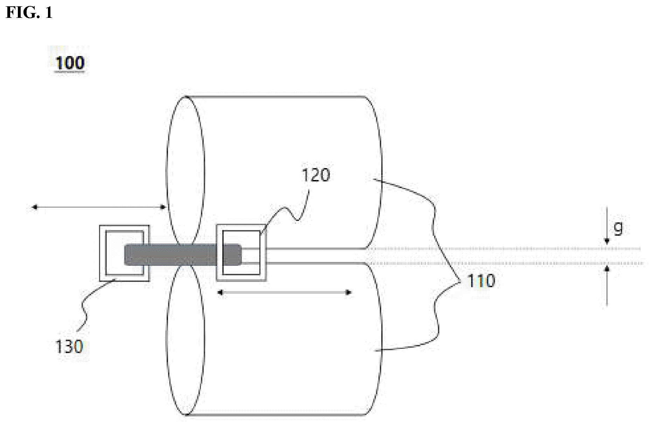

FIG. 1 is a perspective view of a pressing condition inspection system 100 according to an embodiment of the present disclosure.

Referring to FIG. 1, an electrode pressing condition inspection system 100 using optical measurement according to the present disclosure is provided. The electrode pressing condition inspection system 100 using optical measurement comprises:
a pair of pressing rollers 100 located at upper and lower parts on the basis of the transfer position of an electrode,
a driving unit that drives the pair of pressing rollers 110,
a first light source 120 located on one side in the driving direction of the pair of pressing rollers and irradiating light toward the pair of pressing rollers 110,
a first sensor 130 located on the other side in the driving direction of the pair of pressing rollers 110 and detecting light transmitted from the first light source 120, and
a control unit that analyzes surface information of the pair of pressing rollers 110 and the gap between the pair of pressing rollers 110 from information acquired by the first sensor 130,
wherein the first light source 120 and the first sensor 130 are respectively movable in the width direction of the pair of pressing rollers 110.

When acquiring surface information of the pair of pressing rollers 110 from the first light source 120 and the first sensor 130, the pair of pressing rollers 110 are driven in a state where no electrodes are supplied.

The first light source 120 and the first sensor 130 can move in a pair.

The pair of pressing rollers 110 are continuously driven, the first light source 120 and the first sensor 130 may move from one side edge part to the other side edge part in the width direction of the pair of pressing rollers 110.

In this case, the driving speed of the pair of pressing rollers 110 may be 50 to 150 m/min, specifically 60 to 120 m/min, and more specifically 60 to 100 m/min.

Further, the moving speed of the first light source 120 and the first sensor 130 may be determined in the range of 10 m/min to 120 m/min in consideration of the driving speed of the pair of pressing rollers 110. Specifically, the moving speed may be determined in the range of 20 m/min to 100 m/min, and more specifically, in the range of 20 m/min to 80 m/min.

Further, when acquiring surface information of the pair of pressing rollers 110, the surface information of the pair of pressing rollers 110 is acquired at once. Thus, in consideration of the light intensity and the sensor size of the first light source 120, the gap (g) between the pair of pressing rollers 110 may be 50 *µ*m to 300 *µ*m, specifically 70 *µ*m to 250 *µ*m, and more specifically 100 *µ*m to 250 *µ*m.

From this, surface information of a pair of pressing rollers 110 can be reliably acquired as a whole.

On the other hand, when acquiring surface information of the pair of pressing rollers 110, the information may be acquired by continuous driving and movement as described above. Alternatively, the first light source 120 and the first sensor 130 may start from one side edge part of the width direction of the pair of pressing rollers 110 and repeat movement and stopping at prescribed intervals up to the other side edge part. When the first light source 120 and the first sensor 130 are stopped, the pair of pressing rollers 110 are driven to acquire surface information. When the first light source 120 and the first sensor 130 are moving, the pair of pressing rollers 110 may also stop to thereby obtain surface information. Any method is not limited as long as it is capable of acquiring surface information of a pair of pressing rollers using the light source and sensor.

The surface information of a pair of pressing rollers 110 acquired through this process is transmitted to and analyzed by the control unit. If a portion where the difference between the maximum and minimum values of the gap between the pair of pressing rollers 110 exceeds 10 µm, specifically, exceeds 5 µm exists in the surface information of the pair of pressing rollers 110 acquired from the first sensor, the control unit may determine that the corresponding pressing roller is defective.

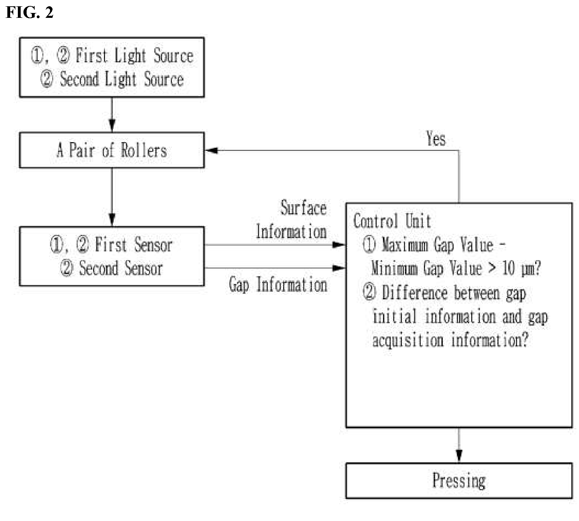

For a more specific explanation, FIG. 2 shows a flow diagram of such a pressing condition inspection system.

Referring to FIG. 2 together with FIG. 1, before the pressing process, the first light source 120 and the first sensor 130 move in the width direction of the pair of pressing rollers 110, acquire surface information of the pair of pressing rollers 110, and transmit it to the control unit. The control unit analyzes based on the surface information of the pair of pressing rollers 110. If there exists a portion where the difference between the maximum and minimum values of the gap between a pair of pressing rollers 110 exceeds 10 µm, specifically, exceeds 5 µm, the pressing roller is determined to be defective and replacement is performed. If there exists no portion where the difference exceeds 10 µm, specifically, exceeds 5 µm, the pressing process is then performed.

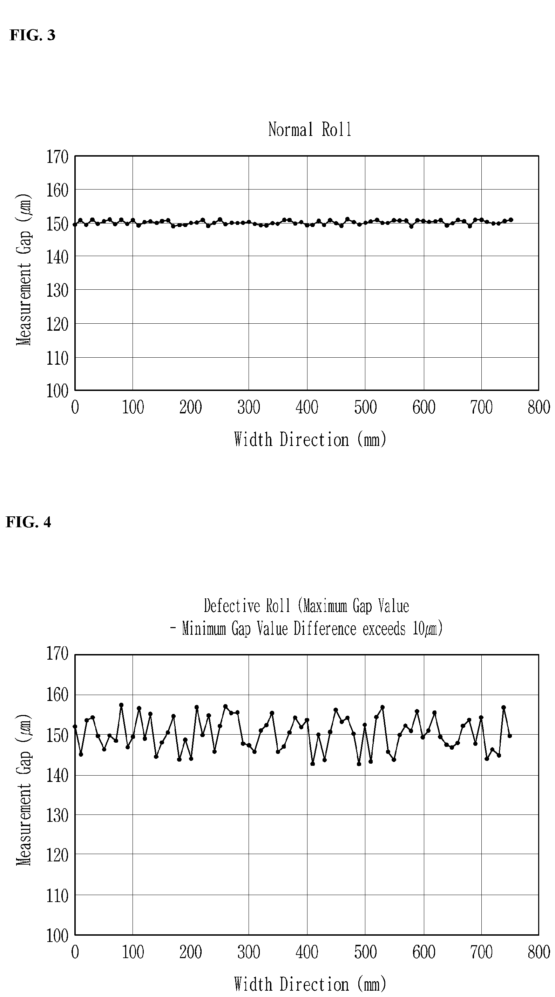

For ease of understanding, FIGS. 3 and 4 show the results of acquiring surface information by the above method for a pressing roller used in an actual electrode manufacturing process.

The experiment was conducted on a pair of pressing rollers having a width of 750 mm, with the gap between the two rollers being set to an average of 150 µm. A laser was used as the first light source, and a CMOS sensor was used as the first sensor.

The driving speed of the pair of pressing rollers was set to 20 m/min.

Referring to FIGS. 3 and 4, FIG. 3 classifies a level where the difference between the maximum and minimum values of the gap between a pair of pressing rollers 110 is 2 *µ*m or less as a normal roll, and FIG. 4 classifies a level where the difference between the maximum and minimum values of the gap between a pair of pressing rollers 110 is 10 *µ*m as a defective roll.

As a result, the electrode pressing condition inspection system 100 according to the present disclosure can prevent deterioration in electrode quality that may occur due to a defect in the pair of pressing rollers 110 .

Meanwhile, with continued reference to FIG. 2, the first light source and the first sensor of the electrode pressing condition inspection system 100 according to the present disclosure irradiate and detect light at one side edge part in the width direction of the pair of pressing rollers, thereby further acquiring information about the gap between the pair of pressing rollers.

If the gap between the pair of pressing rollers acquired in this manner differs from the initially set gap, the gap is adjusted and then measured again. If there is no difference, the electrode pressing process continues to be performed.

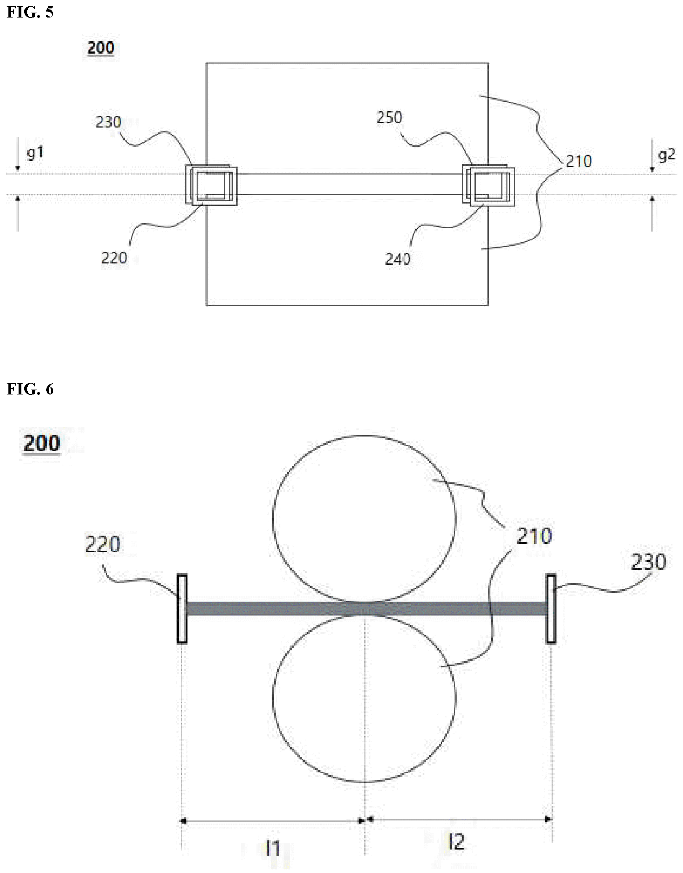

To explain the inspection system for measuring the gap between a pair of pressing rollers, FIG. 5 shows a schematic diagram of a pressing condition inspection system 200 in the longitudinal direction according to yet another embodiment of the present disclosure, and FIG. 6 shows a schematic diagram of the pressing condition inspection system 200 in the width direction.

Referring to FIGS. 5 and 6, when measuring the gap g1 between the pair of pressing rollers, the measurement may be performed using a first light source 220 and a first sensor 230 at one side edge part, but the inspection system has a first light source 220 and a first sensor 230 fixed to one side edge part, and further comprises a second light source 240 that is located on one side in the driving direction of the pair of pressing rollers 210 at the other side edge part of the pair of pressing rollers 210, and a second sensor 250 that is located one the other side in the driving direction of the pair of pressing rollers 210 and detects light transmitted from the second light source 240, thereby capable of acquiring information about the gap g2 between the pair of pressing rollers 210.

The process of acquiring information about the gaps g1, g2 between the pair of pressing rollers 210 may be performed in real time before and after supplying the electrode. That is, it may be performed continuously during the electrode pressing process.

In this case, one side edge part and the other side edge part of the pair of pressing rollers 210 may be portions through which the sheet-shaped electrode does not pass.

This is because the part through which the sheet-shaped electrode passes is affected by factors such as the thickness of the active material layer of the sheet-shaped electrode, and so the substantial gaps g1, g2 between the pair of pressure rollers 210 cannot be kept constant.

Referring again to FIG. 2, which shows a schematic flow diagram of the electrode pressing condition inspection system 200, the information about the gaps g1, g2 between a pair of pressing rollers 210 acquired in this manner is transmitted to the control unit. If the information differs from the initially set gap, the control unit corrects the gap between the pair of pressing rollers in real time, and if not so, the pressing process can be performed continuously.

As a result, the electrode pressing condition inspection system according to the present disclosure can produce electrodes of the same quality with a consistent thickness.

Meanwhile, the first light sources 120, 220 and the second light source 240 used in the electrode pressing condition inspection are not limited as long as they are light sources that minimize divergence, and may be, for example, a laser, a tungsten lamp, or a metal halide lamp, and more specifically, a laser.

Moreover, the first light sources 120, 220 and the second light source 240 may each further comprise a collimator lens that maintains horizontality during light irradiation.

The first sensor 130, 230 and the second sensors 250 are not limited as long as they can receive light and display the received light energy distribution, and for example, they may be CMOS (Complementary Metal Oxide Semiconductor) sensors or CCD (Charge-Coupled Device) sensors. In this case, as the resolution is smaller, it is more advantageous, and as the light-receiving pixel size is also smaller, it is more advantageous.

Specifically, the resolution may be 1 *µ*m to 10 *µ*m, ,more specifically 3 *µ*m to 8 *µ*m, and even more specifically 3 *µ*m to 5 *µ*m.

Further, the first sensors 130, 230 and the second sensor 250 may be line scan sensors having a width of 20 mm to 50 mm. Of course, this is proportional to the measured distance and can be appropriately selected in consideration of the degree of divergence of the first light sources 120, 220 and the second light source 240.

Meanwhile, the first light sources 120, 220, the second light source 240, the first sensors 130, 230, and the second sensor 250 may be located in a state of being separated by 100 mm to 1000 mm (l1, l2) from the center where the pair of rolls 210 are located closest to each other, and specifically, they may be located in a state of being separated by 200 mm to 500 mm.

If the distance is outside the above range and too close, there is a possibility of physical interference with the pair of pressing rollers, and if the distance is too far, the light will diverge or the pattern will become larger due to diffraction and thus the sensor cannot accurately measure the received light energy, which is not preferable.

Although preferred embodiments of the present disclosure have been shown and described above, the scope of the present disclosure is not limited thereto, and numerous other variations and modifications can be made to the embodiments by those skilled in the art using the basic principles of the invention defined in the appended claims, which also falls within the spirit and scope of the invention.

### [Industrial Applicability]

According to the present disclosure, before the pressing process for an electrode, surface information on a pair of pressing rollers used in the pressing process can be acquired using optical measurement, so that defects of the pressing rollers can be inspected and removed in advance, thereby enabling the use of a pair of pressing rollers with superior surface properties. Therefore, it is effective in improving the quality of the manufactured electrode.

In addition, during the pressing process, the gap between the pair of pressing rollers can be measured and adjusted in real time using the optical measurement. Therefore, it is effective in simplifying the pressing process and providing electrodes of consistent quality.

## Claims

1. An electrode pressing condition inspection system using optical measurement, comprising:
a pair of pressing rollers located at upper and lower parts on the basis of the transfer position of an electrode,
a driving unit that drives the pair of pressing rollers,
a first light source located on one side in the driving direction of the pair of pressing rollers and irradiating light toward the pair of pressing rollers,
a first sensor located on the other side in the driving direction of the pair of pressing rollers and detecting light transmitted from the first light source, and
a control unit that analyzes surface information of the pair of pressing rollers and the gap between the pair of pressing rollers from information acquired by the first sensor,
wherein the first light source and the first sensor are respectively movable in the width direction of the pair of pressing rollers.

2. The electrode pressing condition inspection system according to claim 1,
wherein, when acquiring surface information of the pair of pressing rollers from the first light source and the first sensor, the pair of pressing rollers are driven in a state where no electrodes are supplied.

3. The electrode pressing condition inspection system according to claim 2,
wherein the pair of pressing rollers are continuously driven, the first light source and the first sensor move from one side edge part to the other side edge part in the width direction of the pair of pressing rollers, thereby acquiring surface information of the pair of pressing rollers.

4. The electrode pressing condition inspection system according to claim 2 or 3,
wherein the driving speed of the pair of pressing rollers is 50 to 150 m/min.

5. The electrode pressing condition inspection system according to claim 1,
wherein the moving speed of the first light source and the first sensor is 10 to 120 m/min.

6. The electrode pressing condition inspection system according to claim 2 or 3,
wherein when acquiring surface information of the pair of pressing rollers, the gap between the pair of pressing rollers is 50 *µ*m to 300 *µ*m.

7. The electrode pressing condition inspection system according to claim 1,
wherein the control unit determines the corresponding pressing roller to be defective if a portion where the difference between the maximum and minimum values of the gap between the pair of pressing rollers exceeds 10 µm exists in the surface information of the pair of pressing rollers acquired from the first sensor.

8. The electrode pressing condition inspection system according to claim 1,
wherein the first light source and the first sensor irradiate and detect light at one side edge part in the width direction of the pair of pressing rollers to thereby acquire information about the gap between the pair of pressing rollers.

9. The electrode pressing condition inspection system according to claim 8,
further comprising a second light source that is located on one side in the driving direction of the pair of pressing rollers at the other side edge part of the pair of pressing rollers, and a second sensor that is located on the other side in the driving direction of the pair of pressing rollers and detects light transmitted from the second light source to thereby acquire information about the gap between the pair of pressing rollers.

10. The electrode pressing condition inspection system according to claim 8 or 9,
wherein the process of acquiring information about the gap between the pair of pressing rollers is performed in real time before and after supplying the electrode.

11. The electrode pressing condition inspection system according to claim 8 or 9,
wherein one side edge part and the other side edge part of the pair of pressing rollers are portions through which the sheet-shaped electrode does not pass.

12. The electrode pressing condition inspection system according to claim 8,
wherein if the acquired information about the gap between the pair of pressing rollers differs from the initially set gap, the control unit corrects the gap between the pair of pressing rollers in real time.

13. The electrode pressing condition inspection system according to claim 1 or 9,
wherein the first light source and the second light source are a laser, a tungsten lamp, or a metal halide lamp, respectively.

14. The electrode pressing condition inspection system according to claim 1 or 9,
wherein the first light source and the second light source each include a collimator lens that maintains horizontality during light irradiation.

15. The electrode pressing condition inspection system according to claim 1 or 9,
wherein the first light source and the second light source are a CMOS sensor or a CCD sensor, respectively.

16. The electrode pressing condition inspection system according to claim 1 or 9,
wherein the first light source and the second light source are line scan sensors having a width of 20 mm to 50 mm.

17. The electrode pressing condition inspection system according to claim 1 or 9,
wherein the first light source, the second light source, the first sensor, and the second sensor are respectively located in a state of being separated by 100 mm to 1000 mm from the center where the pair of rolls are located closest to each other.
